(19) Europäisches Patentamt
European Patent Office
Office européen des brevets

(11) **EP 1 990 591 A1**

(12) **EUROPEAN PATENT APPLICATION**

(43) Date of publication:
**12.11.2008 Bulletin 2008/46**

(51) Int Cl.:
*F25B 49/02* *(2006.01)*　　*F25D 29/00* *(2006.01)*

(21) Application number: **07107694.7**

(22) Date of filing: **08.05.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(71) Applicant: **Sorgenia S.P.A.**
**20121 Milano (IT)**

(72) Inventor: **Pogliano, Paolo**
**13045, Gattinara (Vercelli) (IT)**

(74) Representative: **Faggioni, Carlo Maria et al**
**Fumero**
**Studio Consulenza Brevetti Snc**
**Pettenkoferstrasse 20-22**
**80336 Munich (DE)**

(54) **Independent and universal device for controlling the speed of motor-driven compressors of household refrigerating apparatuses and control method thereof**

(57) A control device of the speed of a motor-driven compressor of a refrigerating apparatus and the actuation method thereof are disclosed; the device comprising an autonomous housing wherein at least connection means to a network supply line, connected to a rectifier Rd, connection means to the supply inlet of said motor-driven compressor, connected to an inverter In, a device E for the detection of voltage and current, and a controller Cr provided with an inlet connected to said detection device E and a first outlet connected to said inverter In are housed, the controller Cr being capable of determining the energy used up by the refrigerating apparatus and of driving the actuation frequency of said inverter so as to minimise the energy used up.

Fig. 1

**Description**

Field of the Invention

The present invention refers to a device and to a method for controlling a motor-driven compressor of a refrigerating apparatus, in particular a device for controlling the speed of the motor-driven compressor.

Background Art

As known, the development of energy-saving components and projects is a topic of the utmost interest, in the light of the current scenario of energy cost increase and of the attention paid to cutting greenhouse-effect emissions. Such energy-saving targets have been defined at European Community level and subsequently implemented by the member states, including Italy. As far as household appliances are concerned, and in particular refrigerators, deep-freezers and combined fridge-freezers, such saving targets have led to the development and marketing of new products, whose power efficiency values are remarkably higher than those of existing appliances.

In particular, it has been suggested to install refrigerant compressors actuated by electric motors operating at a variable speed; as a matter of fact, it has been observed that the maximum efficiency speed of compressors is different, and in particular lower, than the one relating to nominal power (which is also the maximum power). Consequently, since all refrigerators are sized to work in the heaviest use conditions, which may typically be associated with the initial cooling phase after a prolonged stop, with the initial, transient, food-cooling phase (which has a limited time duration) or with particularly critical environmental conditions (summer periods with high peak temperatures, these too being limited in time), it is evident that, for the purpose of improving energy efficiency, it is useful to adjust the speed of the motor-driven compressor according to the operation conditions of the fridge, setting energy efficiency as target rather than the availability of maximum power.

All the solutions suggested so far, in order to pursue this optimal goal, resort to motors specifically designed to operate in variable speed conditions, typically brushless 3-phase or synchronous motors. Moreover, the control logic is designed and integrated in the specific appliance, with suitable detection probes of operation measures of the refrigerator (typically internal and external thermostats), in order to be able to achieve the desired control of the motor-driven compressor.

Known systems of this type are described, for example, in IT 1247635, US 6.668.571 and US 5.410.230.

Conversely, such technological developments of course affect only newly-built electrical household appliances, which over time will progressively replace existing ones; this situation will imply a rather long time, which can be estimated in at least one decade, for achieving the identified energy saving goals.

For the purpose of achieving the repeatedly-mentioned energy saving goals in a shorter time, it is desired to have, along with the gradual introduction of the new refrigerators, partial changes for existing refrigerating apparatuses, so as to improve the energy performance thereof for the remaining part of their useful life.

The present invention is set in this context, with the main object of increasing the efficiency of the motor-driven compressors of currently-existing domestic refrigerators, deep-freezers and combined fridge-freezers, which are mainly controlled by single-phase, asynchronous, electric motors.

The object of the present invention is hence that of providing a device for controlling the motor-driven compressor, which can be installed easily on any existing refrigerator by the same end-user and which allows to automatically adjust the speed of the motor-driven compressor to increase the overall energy efficiency thereof.

A further object of the invention is to provide a control method which can be implemented in a control device, which allows to achieve the best efficiency of the motor-driven compressor without having additional temperature probes and without knowing in advance the electric characteristics of the refrigerator to be controlled.

Summary of the Invention

Such objects are achieved according to the invention through a device and a method as described in essential terms in the accompanying claims.

In particular, according to a first aspect, energy improvement of the performances of existing refrigerators is achieved through an electronic device consisting of a single-phase inverter and of a control system of the motor speed which controls the compressor of the refrigerant fluid and which acts in connection with the measurement of the electric quantities of the electrical household appliance: applied voltage, absorbed current and active power; such device is external to the refrigerator and use thereof does not imply any refrigerator change.

In principle the device may be applied to refrigerators belonging to all classes (except of course A+ and A++, where a variable-frequency actuating device is already installed), but it is of course more suited for higher-consumption classes (B, C, D, E), since greater energy savings are accomplished.

Furthermore, the control system is adaptive, i.e. it adapts the frequency of the supply voltage of the electric motor to the value to which the maximum efficiency speed of the motor-driven compressor corresponds. Such search function of the optimal frequency may be performed by the control system theoretically on a continuous basis, since every compressor has an optimal speed which depends on its construction features and the control system is not designed to take into account the technical features of the motor-driven compressor it is supplying. For such reason the number of possible values of operation frequencies of the inverter from a theoretical point of view could be infinite, varying continuously from a few Hz to the nominal frequency of 50 Hz. From a practical point of view, according to the invention it is preferably provided that the set of frequency values be discrete, for example a few dozens values. As a not-necessarily exhaustive example, 26 frequency output values may be set corresponding to the integers ranging between 25 Hz and the nominal frequency of 50 Hz.

The control system preferably also monitors that the frequency does not drop below half the nominal frequency, to avoid any operation problems, such as for example insufficient lubrication or persisting oscillations due to mechanical resonance phenomena.

With reference to the thermostatic control system, found in the food storage compartment of the fridge, it generally does not require any change after the introduction of the described device.

Brief Description of the Drawings

Further features and advantages of the device according to the invention will in any case be more evident from the following detailed description of a preferred embodiment of the same, given by way of example and illustrated in the accompanying drawings, wherein:

> fig. 1 is a circuit diagram of the device according to a preferred embodiment of the invention; and
> fig. 2 is a flow diagram which illustrates the logic of the control system.

Detailed Description of a Currently Preferred Embodiment

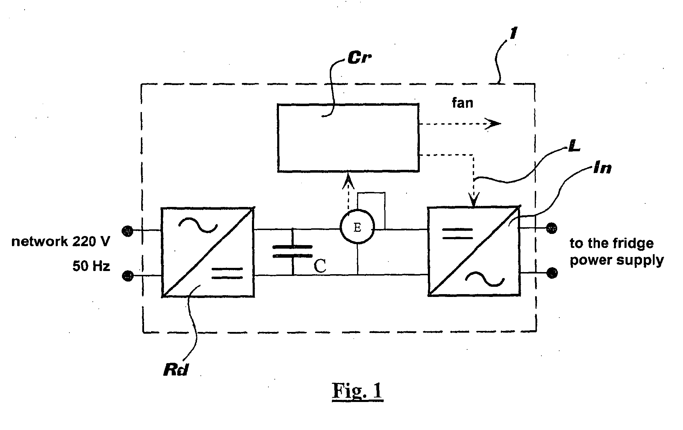

The principle block diagram concerning the hardware structure of the described device is depicted in fig. 1. Independent control device 1 comprises, enclosed within a suitable package (not shown), a rectifier Rd connected to an inverter In, between which a capacitor C is arranged. In the device there is further included a proper controller Cr, within which the control logic is implemented, which receives from a detection device E information on the power absorbance (i.e. a voltage and current reading) along the section connecting rectifier Rd to inverter In; in turn, controller Cr is connected (line L) to inverter In to allow the desired drive, and possibly to a small fan (not shown), whose usefulness will be described below.

The core of the device, where the actual control logic of the refrigerating appliance lies, is the controller Cr. The main functions performed by controller Cr essentially consist in the computing of the active energy used up, obtained as an integration of the instant power measured by device E, in the search for the frequency corresponding to the maximum efficiency of the fridge and in the sequential generation of the controls to be imparted to the inverter in order to obtain the desired frequency and voltage values. These functions will appear more clearly in the following description.

Device 1 is conceived as a self-contained object, applicable to existing fridges by the end user without important interventions or changes to the refrigerating appliance. As a result device 1 is designed to be connected, on the side of rectifier Rd, to the electric supply network (nominally running at 220 V and 50 Hz) and, on the side of inverter In, to the supply line of the refrigerating appliance, i.e. of the corresponding motor-driven compressor.

From observing fig. 1 it can be detected that network voltage (nominally, for example, 220 V at 50Hz) is rectified by rectifier Rd and hence stabilised by the presence of capacitor C. In the subsequent section, in continuous current, voltage and current measurement is performed by detection device E - for example, a simple analog/digital converter - which measure is sent to controller Cr and transformed into instant power; said controller performs the actual processing of these measurements, in a suitable manner, for generating an output signal representing the frequency value which must be set in inverter In to accomplish the desired reduction in energy consumption of the fridge.

As inverter, an inverter for small power values available on the market may be used, such as, for example, SIP-IPM (Single In-line Package Intelligent Power Module) PS 21661 available from Mitsubishi Electric, which can be driven directly by a microcontroller.

As already mentioned, through the same algorithm implemented in controller Cr, according to a further preferred embodiment, a signal is also generated for the actuation of a small cooling fan (not shown) for the external serpentine of the fridge condenser. In this case, the purchaser will be provided with a kit which, in addition to device 1, also contains a small fan to be easily applied to the outer serpentine of the fridge or in proximity thereof.

The small cooling fan of the serpentine of the fridge condenser, actuated by controller Cr upon measurement (through device E) of non-void current values, improves thermal exchange since it partly transforms convection from natural to forced. It is obvious that the energy used up by said fan must be small compared to that resulting from the improvement of thermal exchange; the benefit which may be obtained in terms of net energy saving may be quantified in about 5% of the overall energy absorbed by the fridge.

The device is firstly designed for existing fridges, whereon motor-driven compressors are installed, which in nearly 100% of cases are motor-driven compressors actuated by single-phase asynchronous electric motors: as a result, inverter In is a single-phase one. Moreover, it works so that the ratio between the effective value of the output voltage and the frequency is kept constant upon variation of the latter and equal to the ratio between nominal voltage and frequency. Such fact allows, with close approximation, to keep constant both the motor torque and the current absorbed thereby with the corresponding power factor.

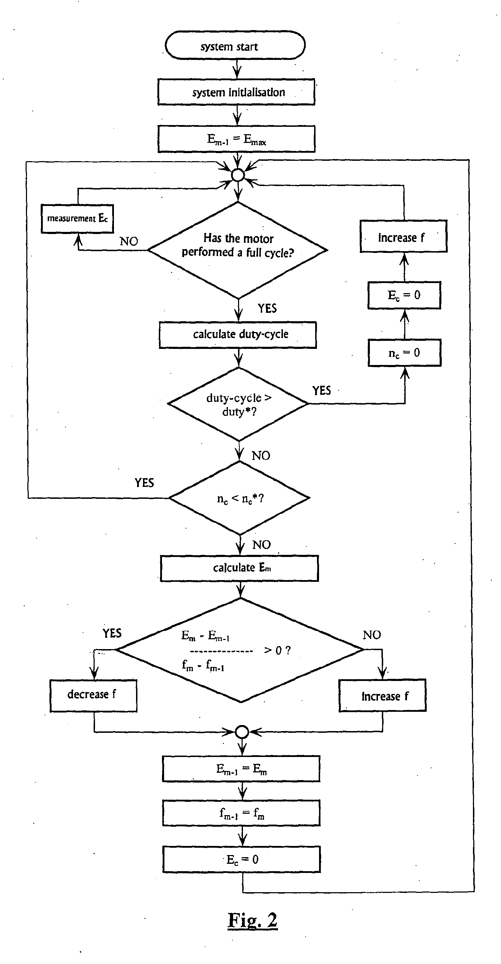

The control system, i.e. all the logical functions developed by the controller to allow the desired operation of the device subject of the present invention, is summarised in the flow diagram depicted in fig. 2.

In order to be able to illustrate more in detail various reported functions, it is firstly necessary to proceed to define some symbols reported in the cited flow diagram:

cycle = operation of the motor-driven compressor which represents a switching-on phase followed by a switching off phase;

duty-cycle = percentage of time for which the motor-driven compressor remains switched on with respect to the cycle time;

duty* = limit value of the duty-cycle beyond which it is necessary to supply more power to the motor-driven compressor;

f = operation frequency of the inverter;

$n_c$ = number of cycles;

$n_c^*$ = minimum number of consecutive cycles before each optimisation phase;

$E_c$ = energy used up by the motor-driven compressor during a cycle;

$E_{max}$ = maximum initial value assumed for the average hourly energy used up by the motor-driven compressor;

$E_m$, $E_{m-1}$ = value of the average hourly energy used up by the motor-driven compressor respectively in the last $n_c^*$ cycles and in the immediately preceding ones;

$f_m$, $f_{m-1}$ = values of the frequencies corresponding to energies $E_m$ and $E_{m-1}$, respectively.

For the purpose of reducing to a minimum the energy consumption of the fridge, the controller has as primary objective the search for the optimal motor operation speed which depends, as already mentioned, on the technical characteristics of the motor-driven compressor which are not known beforehand, since the device of the present invention must be applicable in a universal manner to most existing fridges.

The search for and control of the motor speed are carried out in terms of operation frequency. As a matter of fact, as known, the rotation speed of an asynchronous motor, be it single-phase or 3-phase, is virtually equal to the frequency of the supply voltage divided by the number of pairs of magnetic poles of the motor; thus a motor with a single pair of poles driven at the frequency of 50 Hz rotates at a speed of about 50 rev/second, while if it is driven at a frequency of 30 Hz it rotates at a speed of about 30 rev/second. Such behaviour hence implies that the rotation speed virtually coincides with the frequency divided by the number of pairs of magnetic poles, which is a characteristic quantity of each motor.

The flow diagram of fig. 2 shows in brief a preferred operation sequence, based on which the search for the frequency corresponding to the minimum energy consumption is performed according to the invention.

After switching on and the subsequent system initialisation phase, during which an initial operation frequency (for example equal to 45 Hz) is set, among other things, the initial value of $E_{m-1} = E_{max}$ is also set. After that, controller Cr, through device E, detects the voltage and current values and hence the measure of used up energy $E_c$ during an operation cycle and then it moves on to the subsequent assessment of the duty-cycle of the cycle, which is calculated as the ratio between the time in which the absorbed power was other than 0 and the overall cycle time; if the duty-cycle value exceeds a limit value duty*, set for example at about 80%, counting of the cycles is reset ($n_c$=0), counting which contributes to a preset number $n_c^*$, then the measured value of energy $E_c$ is cleared and the value of frequency f (which is sent as a variation signal also to inverter In) is increased, so that the cycle may start again with parameters suited to supply more power to the fridge. As a matter of fact, it is evident that the cooling power made available by the motor-driven compressor decreases as the speed of the same, i.e. the motor supply frequency, decreases; if such power dropped to a value below that of the power dissipated outside the fridge, the duty-cycle value would rise beyond the threshold and correct food preservation would no longer be guaranteed.

The measured duty-cycle value hence represents an extremely important status variable for checking for correct system operation.

This energy measurement phase is repeated an $n_c^*$ number of consecutive cycles, wherein the motor-driven compressor works at a frequency $f_m$, during which the duty-cycle has remained below the set duty* threshold value.

At the end of this first routine, measuring electric quantities, the value $E_m$ of the average hourly energy used up by the motor-driven compressor in the last $n_c^*$ operation cycles can hence be calculated ($E_m$ is equal to the ratio between the energy actually used up during such cycles and the overall time corresponding to the same) and subsequently compared with value $E_{m-1}$ corresponding to the immediately preceding $n_c^*$ cycles, during which the motor-driven compressor has worked at a frequency $f_{m-1}$. If such comparison shows that a decrease of energy consumption has occurred after a frequency decrease or an increase of energy consumption due to a frequency increase, i.e.

$$\frac{E_m - E_{m-1}}{f_m - f_{m-1}} > 0$$

it is proceeded to a reduction of frequency f, otherwise it is proceeded to an increase; as already mentioned, this increase/decrease, which could ideally occur for infinitesimal steps, on a practical level is performed for discrete values, for example of 1 Hz at each step.

It is understood that any change of frequency f established by controller Cr is correspondingly turned into a suitable change signal which is supplied to the inverter In driving the frequency of the motor-driven compressor.

Following the variation of frequency f, in both cases the previous value of the measure energy ($E_{m-1}$) is replaced by the current one ($E_m$). At the end of this operation the measurement cycle of the electric quantities is started again.

The illustrated minimisation process refers to a method concerning gradient techniques; such mode is to be intended as provided by way of example for understanding the invention, but is not limiting, in the sense that minimisation processes can be defined which also refer to different-type techniques which can accelerate the convergence process of the algorithm, but which, however, always have as goal the pursuit of equivalence

$$\frac{E_m - E_{m-1}}{f_m - f_{m-1}} = 0$$

Moreover, it is understood that the invention is not limited to the particular embodiment illustrated above, which represents only a non-limiting example of the scope of the invention, but that a number of variants are possible, all within the reach of a person skilled in the field, without departing from the scope of the invention.

For example, although the device has been described with reference to existing fridges provided with single-phase, asynchronous, electric motors, in which the most significant benefits are obtained, it is not excluded that it may be applicable with comparable benefits also to fridges having electric motors of a different type, for example with the purpose of having the apparatus operate in a condition of minimum power consumption without the need of previously identifying the electric features of the motor.

Again, the device of the invention might comprise further accessory elements, without breaching the main teaching offered. For example, values $E_m$ and f may be permanently stored at each cycle, into a re-writeable memory possibly supplied by a suitable battery, so that the optimisation process can converge more rapidly to the desired result also when the electrical supply to the same refrigerating apparatus is accidentally interrupted (due to a temporary network failure).

**Claims**

1. A device controlling the speed of a motor-driven compressor of a refrigerating apparatus, comprising an independent housing body, and universally applicable to existing refrigerating apparatuses, containing at least

   connecting means to a mains supply line, connected to a rectifier (Rd);
   connecting means to a supply inlet of said motor-driven compressor, connected to a rectifier (In);
   a device (E) detecting voltage and absorbed current in a connection section between said rectifier (Rd) and said inverter (In);
   a controller (Cr) provided with an inlet connected to said detection device (E) and a first outlet connected to said inverter (In), the controller (Cr) being apt to determine the energy absorbed by the refrigerating apparatus, based on measuring signals received through said inlet, and to drive the actuation frequency of said inverter through said first outlet so as to minimise said absorbed energy.

2. Device as claimed in claim 1), wherein downstream of said rectifier a capacitor (C) is also provided.

3. Device as claimed in claim 1) or 2), wherein said detection device (E) is an A/D converter.

4. Device as claimed in any one of the preceding claims, wherein said inverter (In) operates so that the ratio between the effective value of the outgoing voltage and the frequency is kept constant upon variation of the latter.

5. Device as claimed in any one of the preceding claims, wherein said controller (Cr) further has a second outlet, through which control signals are delivered to a small, auxiliary cooling fan.

6. Device as claimed in any one of the preceding claims, wherein said motor-driven compressor comprises a single-phase, asynchronous, electric motor.

7. Apparatus for controlling the electric supply of a motor-driven compressor of a refrigerating apparatus, **characterised in that** it comprises a universal device as claimed in any one of the preceding claims, and a small, auxiliary fan which can be applied in the proximity of the cooling serpentine of the refrigerant of the refrigerating apparatus.

8. Controlling method for a device as claimed in any one of the preceding claims, **characterised in that** it comprises the following steps:

   measuring the average electric energy ($E_m$) absorbed in a number $n_c{}^*$ of operation cycles of the motor-driven compressor;
   comparing said absorbed energy ($E_m$) with the energy absorbed ($E_{m-1}$) in the $n_c{}^*$ preceding operation cycles;

increasing the driving frequency f of the motor-driven compressor if the outcome of the comparison determines that

$$\frac{E_m - E_{m-1}}{f_m - f_{m-1}} < 0$$

where $f_m$ and $f_{m-1}$ are the theoretical operation frequencies corresponding to energies $E_m$ and $E_{m-1}$, respectively, and viceversa reducing the frequency f if

$$\frac{E_m - E_{m-1}}{f_m - f_{m-1}} > 0$$

9. Method as claimed in claim 8), wherein said increase or decrease of the frequency f is a discrete value in each step.

10. Method as claimed in claim 9), wherein said discrete value is 1 Hz.

11. Method as claimed in any one of claims 8) to 10), wherein said frequency f is changed so that it never drops below a preset threshold value which would cause mechanical problems to the motor.

12. Method as claimed in claim 11), wherein said preset threshold value is equal to half the nominal operation frequency of the motor.

13. Method as claimed in any one of claims 8) to 12), wherein said measuring step of the average energy absorbed ($E_m$) unfolds throughout a preset number $n_c^*$ of consecutive cycles in which the duty-cycle of the motor-driven compressor keeps below a preset threshold value duty*.

14. Method as claimed in claim 13), wherein in said measuring step of the average energy absorbed ($E_m$), in each cycle where duty-cycle>duty* the reference energy Ec used to calculate the duty-cycle in the subsequent cycle is cleared, the counting of the $n_c$ cycles concurring to the overall number $n_c^*$ is reset and the driving frequency f of the motor-driven compressor is increased.

15. Control method of a refrigerating apparatus of the type comprising an electric, motor-driven compressor for the process of the refrigerant fluid, **characterised in that** it comprises the following steps:

measuring the average electric energy ab-

sorbed ($E_m$) in an $n_c^*$ number of operation cycles of the motor-driven compressor;
comparing said absorbed energy ($E_m$) with the energy absorbed ($E_{m-1}$) in the $n_c^*$ preceding operation cycles;
increasing the frequency f of the supply current of the motor-driven compressor if the outcome of the comparison determines that

$$\frac{E_m - E_{m-1}}{f_m - f_{m-1}} < 0$$

where $f_m$ and $f_{m-1}$ are the frequencies of theoretical electric supplies corresponding to energies $E_m$ and $E_{m-1}$ respectively, and viceversa reducing the frequency f if

$$\frac{E_m - E_{m-1}}{f_m - f_{m-1}} > 0$$

**Fig. 1**

**Fig. 2**

**European Patent Office**

## EUROPEAN SEARCH REPORT

Application Number

EP 07 10 7694

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2006/130504 A1 (AGRAWAL NITYANAND J [IN] ET AL) 22 June 2006 (2006-06-22) | 1,2,4,5,7 | INV. F25B49/02 |
| Y | * paragraphs [0007], [0008], [0042] - [0054], [0070], [0071], [0079] - [0094]; figures 3-5 * | 3,6,8-14 | ADD. F25D29/00 |
| Y | EP 0 697 569 A (FUJITSU GENERAL LTD [JP]) 21 February 1996 (1996-02-21) | 3 | |
| A | | 1,2,4-7 | |
| Y | EP 1 333 236 A (LIEBHERR HAUSGERAETE OCHSENHAU [DE]) 6 August 2003 (2003-08-06) * claims 1,2; figures 1,2 * | 6 | |
| X | US 5 604 672 A (YOSHIDA MAKOTO [JP] ET AL) 18 February 1997 (1997-02-18) * figures 1-3 * | 1,2,4 | |
| A | EP 1 271 071 A (DAIKIN IND LTD [JP]) 2 January 2003 (2003-01-02) * paragraphs [0047] - [0050]; figures 1,6 * | 1-7 | |
| A | US 6 065 298 A (FUJIMOTO SATORU [JP]) 23 May 2000 (2000-05-23) * the whole document * | 1-7 | TECHNICAL FIELDS SEARCHED (IPC) F25D F25B |
| A | GB 2 190 519 A (TOKYO SHIBAURA ELECTRIC CO) 18 November 1987 (1987-11-18) * the whole document * | 4 | |
| A | WO 2007/018662 A (CARRIER CORP [US]; LIFSON ALEXANDER [US]; TARAS MICHAEL F [US]) 15 February 2007 (2007-02-15) * the whole document * | 4 | |

-/--

The present search report has been drawn up for all claims

| Place of search | Date of completion of the search | Examiner |
|---|---|---|
| The Hague | 25 January 2008 | Léandre, Arnaud |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**European Patent Office**

**EUROPEAN SEARCH REPORT**

Application Number

EP 07 10 7694

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 215 454 A (MAGNETEK SPA [IT]) 19 June 2002 (2002-06-19) | 15 | |
| Y | * figures 1-5 * | 8-14 | |
| A | US 5 079 929 A (ALSENZ RICHARD H [US]) 14 January 1992 (1992-01-14) * figure 3 * | 8-12 | |
| A | WO 02/055944 A (BRASIL COMPRESSORES SA [BR]; SCHWARZ MARCOS GUILHERME [BR]; THIESSEN M) 18 July 2002 (2002-07-18) * figures 1,2 * | 8-12 | |
| A | JP 10 288408 A (YASKAWA ELECTRIC CORP; KANTO DENKI KOJI) 27 October 1998 (1998-10-27) * abstract; figure 3 * | 8-12 | |

**TECHNICAL FIELDS SEARCHED (IPC)**

The present search report has been drawn up for all claims

| Place of search | Date of completion of the search | Examiner |
|---|---|---|
| The Hague | 25 January 2008 | Léandre, Arnaud |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

European Patent
Office

Application Number

EP 07 10 7694

## CLAIMS INCURRING FEES

The present European patent application comprised at the time of filing more than ten claims.

☐ Only part of the claims have been paid within the prescribed time limit. The present European search report has been drawn up for the first ten claims and for those claims for which claims fees have been paid, namely claim(s):

☐ No claims fees have been paid within the prescribed time limit. The present European search report has been drawn up for the first ten claims.

## LACK OF UNITY OF INVENTION

The Search Division considers that the present European patent application does not comply with the requirements of unity of invention and relates to several inventions or groups of inventions, namely:

see sheet B

☒ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☐ None of the further search fees have been paid within the fixed time limit. The present European search report has been drawn up for those parts of the European patent application which relate to the invention first mentioned in the claims, namely claims:

☐ The present supplementary European search report has been drawn up for those parts of the European patent application which relate to the invention first mentioned in the claims (Rule 164 (1) EPC).

<table>
<tr><td>**European Patent Office**</td><td>**LACK OF UNITY OF INVENTION SHEET B**</td><td>Application Number<br>EP 07 10 7694</td></tr>
</table>

The Search Division considers that the present European patent application does not comply with the requirements of unity of invention and relates to several inventions or groups of inventions, namely:

1. claims: 1-7

    A device controlling the speed of a motor driven compressor of a refrigerating apparatus
    ---

2. claims: 8-15

    A control method of a refrigerating apparatus of the type comprising an electric, motor-driven compressor
    ---

## ANNEX TO THE EUROPEAN SEARCH REPORT
## ON EUROPEAN PATENT APPLICATION NO.

EP 07 10 7694

This annex lists the patent family members relating to the patent documents cited in the above-mentioned European search report.
The members are as contained in the European Patent Office EDP file on
The European Patent Office is in no way liable for these particulars which are merely given for the purpose of information.

25-01-2008

| Patent document cited in search report | | Publication date | Patent family member(s) | | Publication date |
|---|---|---|---|---|---|
| US 2006130504 | A1 | 22-06-2006 | CA | 2530259 A1 | 17-06-2006 |
| EP 0697569 | A | 21-02-1996 | AU | 672350 B2 | 26-09-1996 |
| | | | AU | 1643795 A | 08-02-1996 |
| | | | CN | 1118862 A | 20-03-1996 |
| | | | DE | 69511969 D1 | 14-10-1999 |
| | | | DE | 69511969 T2 | 24-02-2000 |
| | | | ES | 2136222 T3 | 16-11-1999 |
| | | | GR | 3031833 T3 | 29-02-2000 |
| | | | JP | 8035712 A | 06-02-1996 |
| | | | TW | 382081 B | 11-02-2000 |
| | | | US | 5663627 A | 02-09-1997 |
| EP 1333236 | A | 06-08-2003 | NONE | | |
| US 5604672 | A | 18-02-1997 | JP | 3254922 B2 | 12-02-2002 |
| | | | JP | 8085332 A | 02-04-1996 |
| EP 1271071 | A | 02-01-2003 | AU | 758162 B2 | 20-03-2003 |
| | | | AU | 4278801 A | 15-10-2001 |
| | | | CN | 1366598 A | 28-08-2002 |
| | | | WO | 0175378 A1 | 11-10-2001 |
| | | | JP | 3757745 B2 | 22-03-2006 |
| | | | JP | 2001286183 A | 12-10-2001 |
| | | | US | 2003098298 A1 | 29-05-2003 |
| US 6065298 | A | 23-05-2000 | BR | 9802037 A | 13-10-1999 |
| | | | CN | 1204753 A | 13-01-1999 |
| | | | JP | 11014124 A | 22-01-1999 |
| GB 2190519 | A | 18-11-1987 | AU | 561053 B2 | 30-04-1987 |
| | | | AU | 4418385 A | 09-01-1986 |
| | | | DE | 3523818 A1 | 09-01-1986 |
| | | | GB | 2161298 A | 08-01-1986 |
| | | | JP | 1961143 C | 10-08-1995 |
| | | | JP | 6083590 B | 19-10-1994 |
| | | | JP | 61018392 A | 27-01-1986 |
| | | | US | 4738118 A | 19-04-1988 |
| | | | US | 4663942 A | 12-05-1987 |
| WO 2007018662 | A | 15-02-2007 | US | 2007022765 A1 | 01-02-2007 |
| EP 1215454 | A | 19-06-2002 | AT | 279699 T | 15-10-2004 |
| | | | DE | 60106377 D1 | 18-11-2004 |
| | | | DE | 60106377 T2 | 20-10-2005 |
| | | | ES | 2228788 T3 | 16-04-2005 |

EPO FORM P0459

For more details about this annex : see Official Journal of the European Patent Office, No. 12/82

**ANNEX TO THE EUROPEAN SEARCH REPORT
ON EUROPEAN PATENT APPLICATION NO.**                    EP 07 10 7694

25-01-2008

| Patent document cited in search report | Publication date | Patent family member(s) | | Publication date |
|---|---|---|---|---|
| EP 1215454 A | | IT | FI20000250 A1 | 13-06-2002 |
| US 5079929 A | 14-01-1992 | NONE | | |
| WO 02055944 A | 18-07-2002 | AR | 032236 A1 | 29-10-2003 |
| | | AT | 367562 T | 15-08-2007 |
| | | BR | PI0100052 A | 24-09-2002 |
| | | CN | 1484747 A | 24-03-2004 |
| | | EP | 1352200 A1 | 15-10-2003 |
| | | JP | 3989371 B2 | 10-10-2007 |
| | | JP | 2004517294 T | 10-06-2004 |
| | | MX | PA03005250 A | 14-10-2004 |
| | | SK | 7192003 A3 | 04-11-2003 |
| | | US | 2004168453 A1 | 02-09-2004 |
| JP 10288408 A | 27-10-1998 | NONE | | |

EPO FORM P0459

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- IT 1247635
- US 6668571 B
- US 5410230 A